# EUROPÄISCHE PATENTSCHRIFT

(11) **EP 0 605 360 B1**
(45) Veröffentlichungstag und Bekanntmachung des Hinweises auf die Patenterteilung: **19.03.1997**
(21) Anmeldenummer: 93810843.8
(22) Anmeldetag: 01.12.1993
(51) Int. Cl.: B64D 17/02, B64D 17/30, B64D 25/04

(54) **Ein vom Fahrtwind aufblasbarer Luftsack als Sicherheitsvorrichtung für Benutzer von Gleitfluggeräten**
A RAM air inflated air bag security device for a paraglider
Dispositif de sécurité pour l'utilisateur d'un parapente, constitué d'un sac gonflable par l'action du vent

(30) Priorität: 31.12.1992 CH 137/93
(43) Veröffentlichungstag der Anmeldung: 06.07.1994
(73) Patentinhaber: Meyer, Oliver, CH-3900 Brig (CH); Werlen, Karl, CH-3935 Bürchen (CH)
(72) Erfinder: Meyer, Oliver, CH-3900 Brig (CH); Werlen, Karl, CH-3935 Bürchen (CH)
(74) Vertreter: Feldmann, Clarence Paul

(56) Entgegenhaltungen:
- EP-A- 0 429 374
- WO-A-91/08948
- DE-U- 9 017 104
- FR-A- 1 138 001
- US-A- 2 938 689
- US-A- 4 765 569

## Beschreibung

Gegenstand der Erfindung ist eine Sicherheitsvorrichtung für Benützer von Gleitfluggeräten. Durch ungünstige Windverhältnisse, durch eine falsch kalkulierte Landung oder als Folge einer gewagten Flugfigur kann sich der Pilot plötzlich in einer Situation befinden, die, ohne geeignete Sicherheitsvorrichtung, zu einem heftigen Aufschlag am Boden führen kann. In grossen Höhen bietet ein Notschirm den besten Ausweg. In geringer Flughöhe bleibt dem Notschirm zuwenig Zeit um sich zu entfalten. Da der Pilot sitzend am Gleitschim hängt, fällt er bei einem Absturz häufig auf Becken und Rücken.

Aus WO91/08949 (Wenger) ist ein Gurtzeug for Gleitschirme bekannt, welches als Sicherheitsvorrichtung bei unsanften Landungen dient. Sie umfasst ein als Sitz ausgestaltetes Aufprallkissen. Dieser Sitz weist eine Sitzkissen und ein damit gekoppeltes Rückenkissen auf. Diese Kissen weisen stossmindernde Absorptionskörper in Form von aufblasbaren matrazenartigen Luftkissen mit mehreren Kammern auf. Rückenkissen und Sitzkissen werden vor dem Start über je ein Ventil aufgeblasen.

Aufgabe der Erfindung ist es, eine als Sitz ausgestaltete Sicherheitsvorrichtung zu schaffen, welche beim Flug mit dem Gleitschirm vom Fahrtwind selbst aufgeblasen wird.

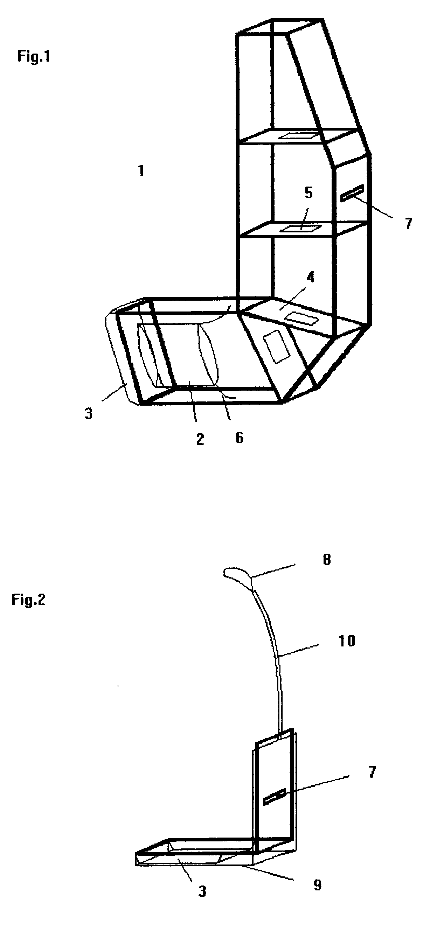

Um Fehlreaktionen des Piloten vorzubeugen und um Zeitverluste durch die Oeffnungszeit des Sicherheitssystems zu vermeiden, muss die Vorrichtung so geschaffen sein, dass sie bei jedem Flug vor der Landevorbereitung eingesetzt wird.
Die Aufgabe wird wie in Patentanspruch 1 angegeben gelöst. Der Pilot trägt den eingepackten Luftsack 1 an der Aussenseite des Sitzes (Fig.2). Durch Zug an einem Auslösegriff 8 wird die Packvorrichtung 9 entfernt oder geöffnet und das Ventil 2 in den Fahrtwind gestellt. Der Luftsack 1 wird sitzförmig am Piloten aufgepumpt. Nach der Landung wird die Luft über eine Entleerungsvorrichtung 7 abgelassen. Der Luftsack kann mit dem Sitz eingepackt werden und ist für den nächsten Einsatz bereit.
- Fig. 1: Luftsack 1 und seine Bestandteile
- Fig. 2: Luftsack verpackt

- Bestandteile:: Luftsack 1
Ventil 2
Ventilrahmen 3
Zwischenwand 4
Zwischenwandöffnungen 5
Ventilpositionierer 6
Entleerungsvorrichtung 7
Auslösegriff 8
Packvorrichtung 9
Auslöseleine 10

Der Luftsack 1 kann auf verschiedene Weise getragen werden. Fix oder abnehmbar an den Sitz angebaut, oder mit eigenem Gurtzeug falls er mit einem beliebigen Sitz verwendet werden soll.

Der Pilot startet mit verpacktem Luftsack 1 (Fig.2). Sobald er in Bodennähe kommt, und ein Notschirm nicht mehr eingesetzt werden kann, wird die Auslösevorrichtung durch Zug am Auslösegriff 8 betätigt. Die Packvorrichtung 9 welche den Luftsack 1 umhüllt wird über eine Auslöseleine 10 entfernt oder geöffnet. Das Ventil 2 stellt sich durch sein Gewicht von selber in die richtige Position. Die aerodynamische Form des Ventilrahmens 3 verringert den Luftwiderstand des Ventils 2.

Das Ventil 2 hängt am Ventilrahmen 3. Es ist schlauchförmig und besteht aus leicht verformbarem Gewebe. Die Luft wird durch das Ventil 2 in den Luftsackinnenraum geleitet. Der Fahrtwind erzeugt im Luftsack 1, relativ zur Umgebung, einen erhöhten Druck. Reisst der Fahrtwind ab, wird das verformbare Ventil 2 vom Ueberdruck im Luftsackinnern zusammengepresst. d.h. Das Ventil 2 schliesst, die Luft kann dem Luftsack 1 nicht entweichen. Der gleiche Effekt erfolgt bei einem Fall auf den Luftsack 1.

Das Ventil 2 ist am hinteren Ende des Ventilschlauchs über die zwei Ventilpositionierer 6 an der Ober-, und Unterwandung des Innenraums befestigt. Die Ventilpositionierer 6 dienen der Positionierung des Ventils 2 bei der Entfaltung des Luftsacks 1.

Der Luftsackinnenraum ist durch Zwischenwände 4 in Teilräume aufgeteilt. Die Teilräume sind durch Zwischenwandöffnungen 5 miteinander verbunden. Die Unterteilung soll bei einem Aufprall das plötzliche Ausweichen der Luft in weniger belasteten Raum verzögern.

Die Entleerungsvorrichtung 7 dient dem Luftablass nach der Landung. Sie kann in Form von einem verschraubbaren Verschluss aus leichtem Material oder mit einem Reissverschluss realisiert werden.

Nach der Landung wird der Luftsack 1 über eine Entleerungsvorrichtung 7 entleert, gefaltet, der Ventilrahmen 3 zurückgeklappt und mit der Packvorrichtung 9 eingepackt.

## Patentansprüche

1. Aufblasbarer Luftsack (1) als Sicherheitsvorrichtung für Gleitschirme in Form eines mittels eines Ventiles (2) aufblasbaren, in Kammern unterteilten, Sitzes, welcher ins Gurtzeug oder in einen Sitz eines Gleitfluggerätes einbaubar ist, **dadurch gekennzeichnet**, **dass** das Ventil (2) an der Frontseite des Sitzes, sich selbst in den Fahrtwind stellend, angeordnet ist, so dass der Luftsack (1) durch den Fahrtwind allein aufblasbar ist.

2. Aufblasbarer Luftsack nach Anspruch 1, dadurch gekennzeichent, dass das Ventil (2) aus leicht verformbarem Material schlauchförmig ausgestaltet und mit seinem Ventileingang an einem Ventilrahmen (3) aufgespannt ist.

3. Aufblasbarer Luftsack nach Anspruch 2, dadurch gekennzeichnet, dass der Ventilrahmen (3) luftwiderstandssenkend aerodynamisch geformt ist.

4. Aufblasbarer Luftsack nach einem der Ansprüche 2 bis 3, dadurch gekennzeichnet, dass der Ventilrahmen (3) gelenkig zum Sitz fixiert ist.

5. Aufblasbarer Luftsack nach einem der Ansprüche 2 bis 4, dadurch gekennzeichnet, dass Ventilpositionierer (6) vorgesehen sind, mittels welchen das Ende des schlauchförmigen Ventiles (2) an der Wandung des Innenraums des Luftsackes (1) befestigt ist.

6. Aufblasbarer Luftsack nach Anspruch 1, dadurch gekennzeichnet, dass eine Entleerungsvorrichtung (7) eingebaut ist.

7. Aufblasbarer Luftsack nach Anspruch 6, dadurch gekennzeichnet, dass die Entleerungsvorrichtung einen Schraubverschluss oder einen Reissverschluss umfasst.

8. Aufblasbarer Luftsack nach Anspruch 6, dadurch gekennzeichnet, dass eine Packvorrichtung (9) für den Luftsack mit einem Auslösegriff (8) vorgesehen ist.

## Claims

1. An inflatable airbag (1) as a safety device for parafoils, in the form of a seat subdivided into chambers, inflatable by means of a valve (2) and which can be incorporated into the belt or seat of a paraglider, characterised in that the valve (2) is located at the front of the seat and automatically positions itself in the air stream, so that the airbag (1) can be inflated solely by the air stream.

2. An inflatable airbag according to claim 1, characterised in that the valve (2) has a hose-like design of readily deformable material and is secured at its valve inlet to a valve frame (3).

3. An inflatable airbag according to claim 2, characterised in that the valve frame (3) is shaped aerodynamically so as to reduce air resistance.

4. An inflatable airbag according to either one of the claims 2 or 3, characterised in that the valve frame (3) is secured in articulated manner to the seat.

5. An inflatable airbag according to any one of the claims 2 to 4, characterised in that valve positioners (6) are provided, by means of which the end of the hose-like valve (2) is fixed to the wall of the inner space of the airbag (1).

6. An inflatable airbag according to claim 1, characterised in that an emptying device (7) is fitted.

7. An inflatable airbag according to claim 6, characterised in that the emptying device incorporates a screw closure or zip closure.

8. An inflatable airbag according to claim 6, characterised in that a packing device (9) for the airbag is equipped with a release grip (8).

## Revendications

1. Sac gonflable à l'air (1), servant de dispositif de sécurité pour parapentes, sous forme d'un siège, divisé en compartiments, gonflable au moyen d'une soupape (2) et qui peut être placé dans une sangle ou dans un siège d'un parapente, caractérisé en ce que la soupape (2) est placée sur la partie frontale du siège, qui se trouve elle-même du côté du vent relatif, de telle sorte que le sac à air (1) puisse être gonflé seulement par le vent relatif.

2. Sac gonflable à l'air selon la revendication 1, caractérisé en ce que la soupape (2) est constituée d'un matériau facilement déformable de forme tubulaire et est monté avec son orifice d'entrée de soupape sur un châssis de soupape (3).

3. Sac gonflable à l'air selon la revendication 2, caractérisé en ce que le châssis de soupape (3) est mis en forme aérodynamiquement sous l'effet de la résistance de l'air.

4. Sac gonflable à l'air selon l'une des revendications 2 à 3, caractérisé en ce que le châssis de soupape (3) est fixé au siège de manière articulée.

5. Sac gonflable à l'air selon l'une quelconque des revendications 2 à 4, caractérisé en ce que sont prévus des positionneurs de soupape (6) au moyen desquels l'extrémité de la soupape de forme tubulaire (2) est fixée sur la paroi de l'espace intérieur du sac à air (1).

6. Sac gonflable à l'air selon la revendication 1, caractérisé en ce qu'il comprend un dispositif d'évacuation (7).

7. Sac gonflable à l'air selon la revendication 6, caractérisé en ce que le dispositif d'évacuation comporte un bouchon fileté ou une fermeture à glissière.

8. Sac gonflable à l'air selon la revendication 6, caractérisé en ce qu'il est prévu un dispositif d'empaquetage (9) pour le sac à air avec une poignée de déclenchement (8).
